# EUROPÄISCHE PATENTANMELDUNG

(11) **EP 4 745 544 A1**
(43) Veröffentlichungstag der Anmeldung: **20.05.2026**
(21) Anmeldenummer: 24213296.7
(22) Anmeldetag: 15.11.2024
(51) Int. Cl.: G01K 3/04, G01K 7/16

(54) **ERMITTLUNG EINER THERMISCHEN BELASTUNG EINES BAUTEILS**

(71) Anmelder: Siemens Aktiengesellschaft, 80333 München (DE)
(72) Erfinder: Franke, Martin, 14089 Berlin (DE); Jeske, Nora, 10555 Berlin (DE); Müller, Bernd, 16259 Falkenberg (DE); Nachtigall-Schellenberg, Christian, 14480 Potsdam (DE); Raab, Oliver, 94496 Ortenburg (DE); Schwarz, Markus, 78199 Bräunlingen (DE); Strogies, Jörg, 14163 Berlin (DE); Weikert, Robert, 92342 Burggriesbach (DE)
(74) Vertreter: Siemens Patent Attorneys

(57) **Zusammenfassung**

Es wird ein Verfahren zum Abschätzen einer thermischen Belastung eines Bauteils (1) für einen Zeitraum nach einer Herstellung des Bauteils (1) angegeben,
- wobei das Bauteil (1) ein Testelement (10) umfasst, welches in einem Ursprungszustand des Bauteils (1) wenigstens einen Schichtstapel (12) mit wenigstens zwei flächig übereinanderliegenden Schichten (21,22) aus wenigstens zwei unterschiedlichen metallischen Materialien aufweist, so dass durch eine thermische Belastung des Testelements (10) eine intermetallische Phase (23) aus den unterschiedlichen metallischen Materialien ausgebildet werden kann,
- wobei das Verfahren die folgenden Schritte umfasst:
a) Durchführen einer physikalischen Messung an dem Testelement (10), mittels welcher eine Menge (d) einer durch thermische Belastung ausgebildeten intermetallischen Phase (23) ermittelbar ist,
b) Ermitteln wenigstens eines Kennwerts für die bisherige thermische Belastung des Bauteils (1) zum Zeitpunkt der Messung auf Basis einer durch die physikalische Messung ermittelten Menge (d) der im Testelement (10) ausgebildeten intermetallischen Phase (23).

Weiterhin wird ein entsprechendes Bauteil zur Charakterisierung mit diesem Verfahren angegeben.

## Beschreibung

Die vorliegende Erfindung betrifft ein Verfahren zum Abschätzen einer thermischen Belastung eines Bauteils für einen Zeitraum nach einer Herstellung des Bauteils. Weiterhin betrifft die Erfindung ein Bauteil mit einem Testelement zur Ausführung eines solchen Verfahrens.

Nach dem Stand der Technik wird eine Überwachung der während der Lebensdauer von elektronischen Bauteilen auftretenden thermischen Belastung typischerweise nicht durchgeführt. Thermische Belastungen oberhalb einer vorgegebenen maximalen Belastungstemperatur können zu einer Schädigung des jeweiligen Bauteils führen. Die Kenntnis darüber, ob eine solche vorgegebene maximale Belastungstemperatur beim bisherigen Betrieb eines Bauteils bereits überschritten wurde (und wenn ja, wie lange), kann daher hilfreich sein, um eine Entscheidung zwischen einer Weiternutzung oder einer Außerbetriebnahme eines bereits im Einsatz befindlichen Bauteils treffen zu können.

Allgemein besteht ein Bedarf an zusätzlichen Informationen über die Belastung während der Nutzungshistorie eines Bauteils, um eine Einschätzung einer verbleibenden Restlebensdauer zu ermöglichen, beziehungsweise um eine qualifizierte Entscheidung über eine Weiternutzung treffen zu können. Nach dem Stand der Technik wird eine solche Einschätzung (falls überhaupt) meist aufgrund von visuellen Qualitäts-Inspektionen und/oder elektrischen beziehungsweise mechanischen Tests getroffen. Mit anderen Worten wird also eine Funktionsfähigkeit überprüft und/oder das Bauteil wird im Hinblick auf visuell erkennbare Schäden geprüft. Eine systematische Überwachung im Hinblick auf die beim Betrieb auftretende thermische Belastung findet im Allgemeinen nicht statt, obwohl solche Daten für die beschriebenen Entscheidungen hilfreich wären. Der Grund liegt darin, dass eine genaue Erfassung der Temperatur-Historie beim Betrieb eines Bauteils mit einem vergleichsweise hohen apparativen Aufwand verbunden ist. Messungen von thermischen Belastungen beim Betrieb von Bauteilen über spezielle Temperatur-Sensoren finden daher nur in Ausnahmefällen statt. Selbst wenn solche Messungen beim Betrieb eines Bauteils durchgeführt werden, stehen die erhaltenen Daten einem potenziellen Verwerter eines bereits benutzten Bauteils nicht immer zur Verfügung.

Aufgabe der Erfindung ist es daher, ein Verfahren zur Abschätzung der beim Betrieb eines Bauteils aufgetretenen thermischen Belastung anzugeben, welches insbesondere durch eine Messung an dem benutzten Bauteil umgesetzt werden kann und keine kontinuierliche Temperaturüberwachung während der Benutzung des Bauteils erfordert. Dieses Verfahren soll insbesondere möglichst einfach umzusetzen sein. Eine weitere Aufgabe ist es, ein Bauteil anzugeben, das sich für eine solche Abschätzung seiner bisherigen thermischen Belastung eignet.

Diese Aufgaben werden durch das in Anspruch 1 beschriebene Verfahren und das in Anspruch 14 beschriebene Bauteil gelöst.

Das erfindungsgemäße Verfahren dient zum Abschätzen einer thermischen Belastung eines Bauteils, insbesondere für einen Zeitraum nach einer Herstellung des Bauteils. Das Bauteil umfasst ein Testelement, welches in einem Ursprungszustand des Bauteils wenigstens einen Schichtstapel mit wenigstens zwei flächig übereinanderliegenden Schichten aus wenigstens zwei unterschiedlichen metallischen Materialien aufweist, so dass durch eine thermische Belastung des Testelements zumindest in einem Teilbereich des Schichtstapels eine intermetallische Phase aus den unterschiedlichen metallischen Materialien ausgebildet werden kann. Das Verfahren umfasst zumindest die folgenden Schritte:
a) Durchführen einer physikalischen Messung an dem Testelement, mittels welcher eine Menge einer durch thermische Belastung ausgebildeten intermetallischen Phase ermittelbar ist,
b) Ermitteln wenigstens eines Kennwerts für die bisherige thermische Belastung des Bauteils zum Zeitpunkt der Messung auf Basis einer durch die physikalische Messung ermittelten Menge der im Testelement ausgebildeten intermetallischen Phase.

Unter dem genannten "Abschätzen einer thermischen Belastung" soll dabei ein Ermitteln einer Belastung im Sinne einer zumindest näherungsweisen Bestimmung wenigstens eines Kennwerts verstanden werden, welcher für die bisherige thermische Belastung des Bauteils charakteristisch ist. Insbesondere muss dies keine exakte Berechnung einer physikalischen Größe sein, sondern es reicht aus, wenn als Kennwert z.B. eine Wahrscheinlichkeit für ein bisheriges Überschreiten einer vorgegebenen Temperaturschwelle abgeschätzt wird oder eine Dauer für eine bisherige Überschreitung einer vorgegebenen Temperaturschwelle abgeschätzt wird.

Unter einer "thermischen Belastung" soll im vorliegenden Zusammenhang eine Belastung des Bauteils durch thermisch induzierte Prozesse verstanden werden, welche bei einer Temperatur oberhalb der üblichen Lagerungstemperatur und insbesondere oberhalb einer Standard-Raumtemperatur von 20 °C im Bauteil stattfinden. Insbesondere werden hier thermische Belastungen bei Temperaturen oberhalb von 50 °C charakterisiert und abgeschätzt, welche infolge einer Benutzung des betreffenden Bauteils auftreten, beispielsweise durch Wärme, die beim Betrieb eines elektrischen bzw. elektronischen Bauteils dissipiert wird. Alternativ kann die Temperatur aber auch durch andere Wärmequellen erhöht sein, z.B. durch Verbrennungswärme und/oder durch Reibungswärme aus mechanischen Prozessen. Mit dem erfindungsgemäßen Verfahren wird die thermische Belastung insbesondere für einen Zeitraum nach der Herstellung des Bauteils ermittelt, also z.B. für die Belastungshistorie seit der Inbetriebnahme des Bauteils, insbesondere aufgrund oder zumindest während seiner bisherigen Benutzung.

Das betrachtete Bauteil kann insbesondere ein elektrisches und/oder elektronisches Bauteil sein, also mit anderen Worten ein Bauteil mit wenigstens einer elektrischen bzw. elektronischen Funktionalität. Das Bauteil kann z.B. ein einzelnes elektrisches Bauelement in einem übergeordneten Produkt sein oder ein elektrisches/elektronisches Modul oder Untermodul in einem übergeordneten Produkt. Alternativ kann es sich bei dem Bauteil aber auch um ein vollständiges Produkt handeln, welches als Ganzes vertrieben und in Betrieb genommen wird. Unabhängig von der Größe des Bauteils (Bauelement, Untermodul, Modul oder ganzes Produkt) kann das erfindungsgemäße Verfahren genutzt werden, um anhand der abgeschätzten thermischen Belastung eine Restlebensdauer des Bauteils abzuschätzen, beziehungsweise um als Grundlage für eine Entscheidung über eine potenzielle Weiternutzung des Bauteils zu dienen.

Im Ursprungszustand des Bauteils liegt in dem Testelement ein Schichtstapel aus zwei oder mehr flächig übereinanderliegenden metallischen Schichten vor, die aus unterschiedlichen metallischen Materialien gebildet sind. Unter diesem "Ursprungszustand" wird ein Zustand nach der Herstellung des Bauteils verstanden, in welchem noch keine wesentliche thermische Belastung durch die Nutzung des Bauteils erfolgt ist. Insbesondere hat in diesem Ursprungszustand (abgesehen von einer ggf. aufgetretenen kurzzeitigen thermischen Belastung während der Herstellung des Bauteils) keine wesentliche thermische Belastung des Schichtstapels oberhalb von 100 °C stattgefunden. In diesem Ursprungszustand hat sich daher noch keine wesentliche Menge der intermetallischen Phase aus den Ausgangsmaterialien der übereinanderliegenden Schichten gebildet. Die Bildung geringfügiger Mengen der intermetallischen Phase im Grenzbereich der übereinanderliegenden Schichten soll dabei nicht grundsätzlich ausgeschlossen sein. Eine vollständige Durchwachsung von einer der Schichten des Schichtstapels liegt in diesem Ursprungszustand jedenfalls noch nicht vor. Erst durch die während der Nutzung des Bauteils auftretende thermische Belastung erfolgt eine Ausbildung einer signifikanten Menge der intermetallischen Phase innerhalb des Schichtstapels.

Unter einer "intermetallischen Phase" (IMP) soll hier allgemein eine homogene chemische Verbindung aus zwei oder mehr Metallen verstanden werden. Die Gitterstruktur der IMP unterscheidet sich dabei insbesondere von den Gitterstrukturen der konstituierenden metallischen Materialien. Diese Ausgangsmaterialien, die im Ursprungszustand in den einzelnen Schichten des Schichtstapels vorliegen, können dabei grundsätzlich entweder Reinmetalle (z.B. Kupfer, Silber, Nickel und/oder Zinn) oder auch metallische Legierungen sein (insbesondere mit den genannten metallischen Elementen als Hauptbestandteil). Im Gitter der IMP herrscht vorteilhaft eine Mischbindung aus einem metallischen Bindungsanteil und einem (meist geringeren) Atombindungs- bzw. lonenbindungsanteil, so dass eine Überstruktur des Gitters resultiert. Durch diesen strukturellen Unterschied in der Gitterstruktur zwischen der ausgebildeten IMP und den metallischen Ausgangsmaterialien kann die Menge der gebildeten IMP durch vergleichsweise einfache physikalische Messungen ermittelt werden, wie weiter unten ausführlicher diskutiert wird. Die IMP bildet sich aufgrund einer thermischen Belastung zumindest im Grenzbereich zwischen den einzelnen Schichten des Schichtstapels aus. Bei länger andauernder thermischer Belastung und/oder vergleichsweise geringer Schichtdicke (von einer der beteiligten Schichten) kann es auch zur Durchwachsung einer Ausgangsschicht kommen, so dass eines der vorliegenden metallischen Ausgangsmaterialien nahezu vollständig in die IMP umgewandelt wird.

In Schritt a) wird mittels einer physikalischen Messung eine Menge der durch die thermische Belastung in dem Schichtstapel ausgebildeten IMP ermittelt. Es wird also wenigstens eine physikalische Eigenschaft gemessen, welche sich aufgrund der Umwandlung der Ausgangsmaterialien in die IMP ändert. Diese Eigenschaft kann beispielsweise eine optische oder eine elektrische Eigenschaft sein. Es können auch mehrere Messungen von mehreren solchen Eigenschaften zum Tragen kommen, um die Genauigkeit bei der Ermittlung der gebildeten Menge der IMP zu erhöhen. Bei der so ermittelten "Menge" der IMP kann es sich insbesondere um eine (mittlere) Dicke einer ausgebildeten IMP-Schicht, einen Belegungsgrad von einem von der IMP durchwachsenen Teil einer außenliegenden Schicht des Stapels, einen relativen Volumen-, Massen- oder Stoffmengenanteil innerhalb des Stapels (oder eines Teilbereichs) oder auch um ein absolutes Volumen, eine Masse oder eine Stoffmenge der ausgebildeten IMP handeln.

In Schritt b) wird auf Basis der so ermittelten Menge der IMP ein Kennwert für die bisherige thermische Belastung des Bauteils ermittelt, beispielsweise eine Angabe zum bisherigen Überschreiten einer vorgegebenen Temperaturschwelle und/oder zur Dauer bzw. Häufigkeit einer solchen vorgegebenen Schwellenüberschreitung. Entsprechende Kennwerte können gegebenenfalls auch für mehrere vorgegebene Temperaturschwellen ermittelt werden. Die Ermittlung des wenigstens einen Kennwerts erfolgt besonders vorteilhaft auf Basis von ein oder mehreren bekannten physikalischen Größen, die für die Ausbildung der betrachteten IMP charakteristisch sind. Insbesondere können hier aus vorausgehenden Messungen an analog zusammengesetzten und hergestellten IMPs ermittelte Werte für die sogenannte Wachstumskonstante der jeweiligen IMP verwendet werden, welche typischerweise in der Einheit [m²/s] angegeben wird und welche stark von der Temperatur abhängt. Unter Nutzung von bekannten Daten für die Temperaturabhängigkeit der Wachstumskonstante für die Ausbildung der jeweils betrachteten IMP kann auf Basis der ermittelten Menge der gebildeten IMP eine Abschätzung der bisherigen thermischen Belastung, z.B. in Form einer der genannten charakteristischen Kennwerte, erfolgen.

Ein wesentlicher Vorteil des erfindungsgemäßen Verfahrens besteht also darin, dass durch Nutzung eines Testelements mit einem metallischen Schichtstapel auf einfache Weise eine nachträgliche Charakterisierung der thermischen Belastung während der Nutzungsphase eines Bauteils ermöglicht wird. Dies kann auf Grundlage einer vergleichsweise einfachen physikalischen Messung erfolgen, welche vorteilhaft zerstörungsfrei durchgeführt werden kann. Damit ist gemeint, dass zumindest die wesentliche Funktionalität des Bauteils erhalten bleibt und das Bauteil somit auch nach der Messung für eine Weiternutzung zur Verfügung steht. Besonders bevorzugt kann auch das Testelement in dem Bauteil bei der Messung erhalten bleiben, dies ist aber nicht zwingend erforderlich.

Das erfindungsgemäße Bauteil weist ein Testelement auf, welches in einem Ursprungszustand des Bauteils wenigstens einen Schichtstapel mit wenigstens zwei flächig übereinanderliegenden Schichten aus wenigstens zwei unterschiedlichen metallischen Materialien aufweist, so dass durch eine thermische Belastung des Testelements eine intermetallische Phase aus den unterschiedlichen metallischen Materialien ausgebildet werden kann. Dabei ist das Testelement insbesondere ein "dediziertes" Testelement. Darunter soll verstanden werden, dass das Testelement separat von weiteren funktionalen Elementen des Bauteils ausgebildet ist und unabhängig von elektrischen und/oder mechanischen Funktionalitäten vorliegt. Mit anderen Worten dient das Testelement ausschließlich dazu, die Anwendung des erfindungsgemäßen Verfahrens auf das Bauteil zu ermöglichen. Das Bauteil ist damit zur Abschätzung einer bisherigen thermischen Belastung mit dem beschriebenen Verfahren ausgelegt. Die Vorteile des erfindungsgemäßen Bauteils ergeben sich analog zu den oben beschriebenen Vorteilen des erfindungsgemäßen Verfahrens.

Vorteilhafte Ausgestaltungen und Weiterbildungen der Erfindung gehen aus den von den Ansprüchen 1 und 14 abhängigen Ansprüchen sowie der folgenden Beschreibung hervor. Dabei können die beschriebenen Ausgestaltungen des Verfahrens auch bei dem Bauteil realisiert werden, und umgekehrt.

Gemäß einer allgemein vorteilhaften Ausführungsform ist der Schichtstapel so ausgebildet, dass die intermetallische Phase durch eine thermische Belastung bei einer Belastungstemperatur oberhalb von 50 °C und insbesondere im Bereich zwischen 50 °C und 250 °C ausgebildet werden kann. Mit anderen Worten ist der Schichtstapel aus den unterschiedlichen metallischen Materialen dann so ausgestaltet, dass sich bei einer Temperatur in dem genannten Bereich signifikante Mengen an der IMP ausbilden, die über die physikalische Messung nachgewiesen werden können. Bei moderaten Temperaturen unterhalb von 25 °C sollen dagegen vorteilhaft noch keine signifikanten Mengen der IMP gebildet werden. Der genannte Bereich der Belastungstemperaturen ist besonders relevant, da beim Betrieb von vielen Bauteilen (insbesondere elektrischen Bauteilen) derartige Temperaturen auftreten können, welche zu einer potenziellen Schädigung des Bauteils beitragen können. Der Temperaturbereich zwischen 100 °C und 250 °C ist dabei besonders relevant im Hinblick auf die beschleunigte Alterung. Solche Belastungstemperaturen können grundsätzlich beim normalen Betrieb auftreten und somit zu einer thermisch bedingten Alterung aufgrund der Nutzung führen. Es sind aber auch thermische Belastungen aufgrund von Fehlerzuständen denkbar, die durch IMP-Systeme mit einer Sensitivität im genannten Bereich nachgewiesen werden können.

Um eine Sensitivität im genannten Bereich zu ermöglichen, kann die IMP im Bereich der Belastungstemperatur eine sogenannte Wachstumskonstante k von wenigstens 10⁻¹⁸ m²/s aufweisen, bevorzugt wenigstens 10⁻¹⁷ m²/s und besonders bevorzugt sogar 10⁻¹⁶ m²/s oder höher. Die Wachstumskonstante k einer IMP wird jeweils für eine vorgegebene Temperatur (die sogenannte Auslagerungstemperatur) angegeben und entspricht der Geradensteigung in einer Auftragung des Quadrats der Dicke der gebildeten IMP gegen die Auslagerungszeit (also der Dauer der entsprechenden Belastung) bei dieser Temperatur. Für weitere Details zur Messung solcher Wachstumskonstanten sei beispielsweise auf die Dissertation "Intermetallische Phasenbildung in den Systemen Silber-Zinn und Nickel-Zinn" von Heidi Willing aus dem Jahr 2021 verwiesen. Wachstumskonstanten in den genannten Bereichen entsprechen der Ausbildung einer IMP von etwa 1 µm Dicke in der Größenordnung von einigen Wochen, Tagen bzw. Stunden. Beispielsweise kann die zu bildende IMP bei einer Auslagerungstemperatur von wenigstens 50 °C (vorteilhaft bei wenigstens 100 °C) eine Wachstumskonstante in einem der genannten Bereiche aufweisen. Weiterhin ist es allgemein vorteilhaft, wenn bei einer Auslagerungstemperatur von 25 °C die Wachstumskonstante unterhalb von 10⁻²⁰ m²/s und vorteilhaft sogar unterhalb von 10⁻²¹ m²/s liegt. Bei derart niedrigen Wachstumskonstanten wird eine etwa 1 µm dicke IMP-Schicht erst innerhalb mehrerer Jahre bis Jahrzehnte gebildet. Bei einem Schichtsystem mit einer derart geringen IMP-Bildung im moderaten Temperaturbereich und einer aufgrund der Diffusionsprozesse derart erhöhten IMP-Bildung im höheren Temperaturberiech keine eine gute Differenzierung zum Nachweis von aufgetretenen thermischen Belastungen im Bereich der genannten Belastungstemperaturen erreich werden.

Gemäß einer vorteilhaften Ausführungsform kann die intermetallische Phase eine IMP mit einer stöchiometrischen Zusammensetzung aus wenigstens zwei Metallen sein. Bei einer solchen stöchiometrischen IMP liegt ein definiertes ganzzahliges Stoffmengenverhältnis der enthaltenen Elemente vor. Solche IMP weisen häufig besonders charakteristische physikalische Eigenschaften auf, die sich von den Eigenschaften der enthaltenen Elemente deutlich unterscheiden. Sie lassen sich daher durch entsprechende physikalische Messungen (z.B. optische oder elektrische Messungen) besonders zuverlässig nachweisen. Eine definierte stöchiometrische Zusammensetzung ist jedoch nicht zwingend erforderlich. Alternativ kann auch eine IMP mit einem ausgedehnteren Homogenitätsbereich im Phasendiagramm im Rahmen der Erfindung für den Nachweis einer thermischen Belastung genutzt werden.

Besonders geeignete stöchiometrische IMP-Verbindungen für den Nachweis thermischer Belastungen in den genannten Temperaturbereichen sind z.B. Verbindungen des allgemeinen Typs CuₓSn_{y}, FeₓSn_{y} und/oder NiₓSn_{y}. Dabei sind die stöchiometrischen Phasen des Typs CuaSn, Cu₆Sn₅, FeSn₂ und/oder Ni₃Sn₄ besonders bevorzugt. Die Bildung solcher IMP im Schichtdickenbereich von einigen µm lässt sich besonders leicht durch optische bzw. elektrische Messungen nachweisen. Es existieren jedoch zahlreiche weitere IMP-Systeme, mit denen ein solcher Nachweis von thermischen Belastungen möglich ist. Allgemein vorteilhaft kann ein erstes metallisches Material des Schichtstapels Kupfer, Eisen oder Nickel sein bzw. die genannten Metalle aus Hauptbestandteil umfassen. Allgemein kann es sich bei dem ersten metallischen Material also auch um ein Reinmetall oder um eine Legierung handeln. Ein zweites metallisches Material des Schichtstapels kann bevorzugt Zinn oder eine zinnhaltige Legierung sein.

Allgemein vorteilhaft kann der Schichtstapel so ausgebildet sein, dass sich aus einem ersten metallischen Material und einem zweiten metallischen Material mehrere stöchiometrische IMP mit unterschiedlichen physikalischen Eigenschaften ausbilden können. Ein Beispiel für ein solches Materialsystem ist ein Schichtstapel aus Kupfer und Zinn, aus dem sich bei entsprechender thermischer Belastung sowohl die Verbindung CuaSn als auch die Verbindung Cu₆Sn₅ bilden können. Ein derartiges System mit mehreren möglichen auszubildenden IMPs kann genutzt werden, um bereits aus einem Schichtstapel eine genauere Ermittlung der thermischen Belastungshistorie zu ermöglichen, als dies mit nur einer ausgebildeten IMP möglich wäre. Dieser Vorteil liegt darin begründet, dass aus den gemessenen Mengen (bzw. dem ermittelten Mengenverhältnis) der beiden gebildeten IMPs mehr Informationen abgeleitet werden können als aus der Menge von nur einer gebildeten IMP als Einzelwert.

Gemäß einer vorteilhaften Ausführungsform kann das Bauteil eine Leiterplatte umfassen. Dabei kann das Testelement insbesondere durch Bestücken wenigstens eines vorgefertigten Ausgangselements auf die Leiterplatte gebildet sein und/oder in das Bauteil eingebracht worden sein. Das Ausbilden des Testelements auf einer Leiterplatte stellt eine besonders einfache Möglichkeit dar, um die beschriebene Nachweismöglichkeit in eine elektrisches bzw. elektronisches Bauteil zu integrieren. Gemäß einer ersten Ausführungsvariante kann der Schichtstapel allgemein *in situ* auf der Leiterplatte erzeugt werden. Dies kann durch Bestücken mit einem vorgefertigten Lotformteil (einem sogenannten Preform) erreicht werden, wobei dieses Lotformteil nach dem Bestücken auf eine darunterliegende Metallisierungsschicht (z.B. aus Kupfer, Eisen, Nickel, Silber oder einem anderen Metall) aufgeschmolzen wird. Die Prozesstemperatur und -dauer wird dabei so gewählt, dass während der Herstellung des Schichtstapels nur vernachlässigbar geringe Mengen der IMP gebildet werden, sodass erst durch nachfolgende thermische Belastung während der Benutzung signifikante Mengen entstehen. Bei einer anderen Form der *in situ* Herstellung können die metallischen Schichten des Schichtstapels aber auch durch direkte Metallisierungsverfahren (z.B. Sputtern, Aufdampfen, chemische bzw. galvanische Abscheidung oder ähnliches) auf einem Substrat aufgebracht werden. Gemäß einer zweiten Ausführungsvariante kann der Schichtstapel vollständig in einem vorgefertigten Ausgangselement ausgebildet werden, welches dann nachträglich durch Bestücken auf die Leiterplatte in das Bauteil eingebracht wird. Neben dem Bestücken bzw. der in-situ-Metallisierung auf der Leiterplatte sind grundsätzlich noch viele andere Ausführungsvarianten denkbar, um das Testelement in das Bauteil einzuführen und mit diesem zu verbinden. So kann das Testelement auch als vorkonfektionierter Testcoupon auf dem Bauteil festgeklebt werden, beispielsweise auf der Innenwand eines Bauteil-Gehäuses. Generell kann das Bauteil auch mehrere solche Testelemente enthalten.

Allgemein besonders bevorzugt kann das Testelement ein Testfeld mit einer Mehrzahl von einzelnen Testsegmenten umfassen, welche jeweils einen zugeordneten Schichtstapel enthalten. Dabei kann sich vorteilhaft zumindest ein Teil der Testsegmente bezüglich des Aufbaus der zugeordneten Schichtstapel unterscheiden. Wenn also mit anderen Worten mehrere unterschiedliche Schichtstapel in dem Testelement vorliegen, in denen jeweils eine IMP ausgebildet werden kann, dann kann aus den entsprechenden physikalischen Messungen an dieser Mehrzahl von Testsegmenten mehr Information über die thermische Belastung gewonnen werden als aus einem einzelnen Testsegment. Je mehr unabhängige Messgrößen erhalten werden, die für die Temperaturbelastung charakteristisch sind, desto mehr Kenngrößen für die Belastung können allgemein daraus abgeleitet werden, analog zur Lösung eines Gleichungssystems mit mehreren Unbekannten. Dies gilt insbesondere dann, wenn sich zumindest ein Teil der Testsegmente bezüglich der Wahl des metallischen Materials einer oder mehrerer Schichten des jeweiligen Schichtstapels unterscheidet. In diesem Fall können also mehrere unterschiedliche IMP gebildet werden, welche aufgrund ihrer unterschiedlichen Zusammensetzung auch unterschiedliche Temperaturcharakteristiken aufweisen. So weisen unterschiedliche IMP-Systeme typischerweise bei einer gegebenen Auslagerungstemperatur verschiedene Wachstumskonstanten auf. Zumindest wird der temperaturabhängige Verlauf der Wachstumskonstanten allgemein unterschiedlich sein. Mit einer Mehrzahl von potenziell ausbildbaren IMP-Systemen kann daher mehr Information über die thermische Belastungshistorie gewonnen werden als mit nur einem solchen System. Um die Herstellung des Testfeldes möglichst einfach zu halten, kann vorteilhaft eine erste metallische Schicht aus einem einheitlichen Material gewählt werden, und beispielsweise nur das Material der zweiten metallischen Schicht kann zwischen den einzelnen Testsegmenten variiert werden. Es können jedoch grundsätzlich auch zwei oder mehr Schichten des Schichtstapels variiert werden, um eine noch breitere Variation des IMP-Systems zu ermöglichen.

Alternativ oder zusätzlich kann sich in einem solchen Testfeld zumindest ein Teil der Testsegmente bezüglich der Schichtdicke einer oder mehrerer Schichten des jeweiligen Schichtstapels unterscheiden. Vorteilhaft kann ein treppenartig gestuftes Dickenprofil für wenigstens eine Schicht des Schichtstapels vorliegen. Alternativ kann aber beispielsweise auch eine kontinuierliche Variation der Schichtdicke vorliegen. Wenn nur eine ausgewählte Schicht des Schichtstapels in ihrer Dicke variiert wird (insbesondere bei gleichbleibender Materialzusammensetzung innerhalb des entsprechenden Teilbereichs des Testfeldes), kann damit auf besonders einfache Weise eine Bestimmung der Schichtdicke der ausgebildeten IMP ermöglicht werden. Wenn die Schichtdicke der ausgebildeten IMP einen ersten Schwellenwert überschreitet, dann wird zunächst in dem Testsegment, in dem die ausgewählte Schicht am dünnsten ist, eine vollständige Durchwachsung dieser Schicht erreicht. Wenn die thermische Belastung weiter fortschreitet, wird die (potenziell) ausgebildete IMP immer dicker, und auch die ausgewählten Schichten der weiteren Testsegmente werden nacheinander durchwachsen (also vollständig in die IMP umgewandelt). Die Bestimmung der "Durchwachsungs-Schwelle" ist bei einer solchen gestuften Dickenserie auf einfache Weise möglich, da das vollständige Durchwachsen meist wesentlich einfacher durch eine physikalische Messung detektierbar ist als das Vorliegen einer IMP weiter im Inneren eines Schichtstapels.

Daher ist es allgemein vorteilhaft, wenn sich zumindest ein Teil der Testsegmente bezüglich einer Schichtdicke einer außenliegenden Schicht des Schichtstapels unterscheidet. An dieser außenliegenden Schicht kann durch die physikalische Messung vergleichsweise einfach festgestellt werden, ob die bestreffende Schicht bereits im Wesentlichen vollständig von der IMP durchwachsen ist oder noch nicht. Allgemein kann die Schichtdicke der außenliegenden Schicht in einem Dickenbereich variiert werden, welcher zwischen 0,05 µm und 100 µm liegt. Mit anderen Worten kann der abgedeckte Variationsbereich ein Teilbereich dieses genannten Bereichs sein. Besonders bevorzugt liegt der abgedeckte Variationsbereichs in einem Teilbereich zwischen 1 µm und 50 µm. Allgemein und unabhängig von den genauen Werten der einzelnen Schichtdicken kann die Spreizung der Schichtdicken der außenliegenden Schicht so gewählt sein, dass zwischen der dicksten Schicht und der dünnsten Schicht ein Faktor von wenigstens 3 und bevorzugt ein Faktor von wenigstens 5 vorliegt. Weiterhin ist es vorteilhaft, wenn wenigstens 3, bevorzugt wenigstens 5 und besonders bevorzugt wenigstens 10 Testsegmente innerhalb einer solchen Schichtdicken-Serie vorliegen. Allgemein bevorzugt können auch mehrere solche Schichtdicken-Serien nebeneinander vorliegen, insbesondere für mehrere unterschiedliche IMP-Materialsysteme.

Allgemein vorteilhaft kann die physikalische Messung auf einer oder mehreren der folgenden Messmethoden basieren:
- einer optischen Messung,
- einer elektrischen Messung,
- einer Messung eines Kontaktwinkels,
- einer Elementaranalyse.

Bei der optischen Messung kann es sich beispielsweise um die Messung einer Absorption, Reflexion und/oder Streuung einer elektromagnetischen Strahlung handeln, die gegebenenfalls auch spektral aufgelöst erfolgen kann. Es kann sich dabei auch um ein ortsaufgelöstes Verfahren der optischen Bildgebung handeln (Optical Imaging). Allgemein kann dabei sichtbares Licht, aber auch Strahlung aus anderen Wellenlängenbereichen zum Einsatz kommen wie beispielsweise UV-Strahlung und/oder Infrarot-Strahlung. So kann zum Beispiel die Bildung der intermetallischen Phasen Cu₆Sn₅ und CuaSn aus den Metallen Kupfer und Zinn besonders einfach durch die Veränderung von Helligkeitswerten in optischen Bildern nachgewiesen und gegebenenfalls quantifiziert werden.

Bei der elektrischen Messung kann es sich insbesondere um die Messung einer elektrischen Leitfähigkeit bzw. eines elektrischen Widerstandes handeln. Aufgrund der weiteren Bindungsanteile (zusätzlich zum metallischen Bindungsanteil) in der IMP ist die elektrische Leitfähigkeit im Vergleich zu den Ausgangsmetallen deutlich erniedrigt. Somit kann die Bildung einer IMP leicht durch eine elektrische Messung nachgewiesen und ggf. quantifiziert werden. Wenn die IMP bis zu einer außenliegenden Schicht eines dünnen Schichtstapels durchgewachsen ist, kann dies beispielsweise durch eine deutliche Änderung eines über eine sogenannte Vierpunktmessung ermittelten Flächenwiderstands der Schicht nachgewiesen werden. Weiterhin kommen als elektrische Messmethoden auch die Messung einer Diodenkennlinie oder allgemeiner die Messung eines elektrischen Stroms und/oder die Messung einer elektrischen Spannung in Frage. Beispielsweise kann auch ein Standardelektrodenpotential eines galvanischen Elements ermittelt werden, bei dem eine außenliegende Schicht des Schichtstapels als Elektrode wirkt. Auch durch solche Messungen kann ein potenziell vorliegendes Durchwachsen dieser außenliegenden Schicht durch die IMP nachgewiesen werden. Allgemein können für die Verwendung einer elektrischen Messmethode ein oder mehrere Elektroden und/oder Kontaktelemente für diese elektrische Messung in das Testelement integriert sein.

Auch durch die Messung eines Kontaktwinkels bei Benutzung einer außenliegenden Oberfläche des Schichtstapels mit einer vorgegebenen Flüssigkeit kann eine Durchwachsung mit der IMP nachgewiesen werden, da sich die Benetzungseigenschaften der IMP typischerweise von denen der Ausgangsmetalle unterscheiden. Alternativ kann auch eine Elementaranalyse durchgeführt werden, um das Vorliegen einer IMP in einem vorgegebenen Bereich über die Zusammensetzung aus den chemischen Elementen nachzuweisen. Auch hier gilt, dass die Messung im Bereich einer außenliegenden Oberfläche besonders einfach durchzuführen ist, da dann für die Elementaranalyse kein Querschliff angefertigt werden muss. Die Elementaranalyse kann beispielsweise durch eine energiedispersive Röntgenstrahlen-Analyse (EDX) erfolgen.

Allgemein und unabhängig von der angewendeten Messmethode kann die physikalische Messung an einer außenliegenden Schicht des jeweiligen Schichtstapels durchgeführt werden.

So kann auf besonders einfache Weise an einem leicht zugänglichen Bereich des Schichtstapels das Vorliegen einer IMP nachgewiesen werden. Diese Methode ist besonders vorteilhaft in Kombination mit dem oben beschriebenen Testfeld, das eine gestuften Serie von Testsegmenten mit unterschiedlichen Schichtdicken einer außenliegenden Schicht aufweist. Über Messungen an einer außenliegenden Schicht einer solchen gestuften Serie lässt sich besonders leicht die sogenannte "Durchwachsungsgrenze" feststellen, also diejenige Schichtdicke der außenliegenden Schicht, bei welcher gerade eben eine Durchwachsung mit der IMP erfolgt ist. Aus dieser Durchwachsungsgrenze lässt sich ohne aufwändige Präparationsschritte (ohne Anfertigung von Querschliffen) und ohne aufwändige Messungen im Inneren des Schichtstapels die Schichtdicke der gebildeten IMP zumindest näherungsweise bestimmen. Je feiner die Abstufung der einzelnen Schichtdicken in solch einer gestuften Serie, desto genauer erfolgt dabei die Bestimmung der Schichtdicke. Bei Wahl einer geeigneten Messmethode, insbesondere bei der Anwendung einer optischen Messung, kann statt einer gestuften Schichtdicken-Serie auch eine kontinuierlich variierende Schichtdicke in Kombination mit einer physikalischen Messung an einer außenliegenden Schicht zur Bestimmung der Schichtdicke angewendet werden. So kann z.B. durch optische Bildgebung an einem sogenannten Schichtdicken-Keil mit bekanntem Dickenprofil die Dicke der gebildeten IMP besonders genau bestimmt werden, indem die Stelle mit einem besonders deutlichen Sprung in den gemessenen optischen Parametern ermittelt wird.

Allgemein und unabhängig von der verwendeten Messmethode kann die physikalische Messung zerstörungsfrei in Bezug auf das Testelement erfolgen. So kann beispielsweise bei optischen oder elektrischen Messungen das Testelement vollständig erhalten werden, so dass es auch bei einer Weiternutzung des Bauteils für eine entsprechende zukünftige Abschätzung der insgesamt aufgetretenen thermischen Belastung zur Verfügung steht. Alternativ kann das Testelement aber prinzipiell auch bei der Messung zerstört, beziehungsweise vor der Messung von den übrigen Bereichen des Bauteils entfernt werden. Beispielsweise kann ein sogenannter Testcoupon auf das Bauteil aufgeklebt sein, welcher vor der Messung von dem Bauteil gelöst wird. Alternativ kann ein solcher Testcoupon einen Teilbereich einer Leiterplatte ausbilden, welcher (z.B. an vorperforierten Sollbruchstellen) vor der Durchführung der Messung von der übrigen Leiterplatte gelöst wird. In diesen Fällen steht das spezielle Testelement nicht mehr für zukünftige Messungen bei einer Weiternutzung des Bauteils zur Verfügung. Es können aber gegebenenfalls auch mehrere solche Testcoupons in das Bauteil integriert sein, welche nacheinander zu den jeweiligen Mess-Zeitpunkten aus dem übrigen Bauteil herausgelöst werden.

Der mit Hilfe des Verfahrens ermittelte Kennwert kann allgemein vorteilhaft einer der folgenden Kennwerte sein:
- ein erster Kennwert, welcher charakteristisch für das bisherige Vorkommen einer Überschreitung einer vorgegebenen Temperaturschwelle ist,
- ein zweiter Kennwert, welcher charakteristisch für die Dauer einer vorgekommenen Überschreitung einer vorgegebenen Temperaturschwelle ist,
- ein dritter Kennwert, welcher charakteristisch für die Häufigkeit der vorgekommenen Überschreitungen einer vorgegebenen Temperaturschwelle ist, insbesondere bei Annahme einer typischen Überschreitungsdauer.

Allgemein vorteilhaft können auch mehrere der genannten Kennwerte ermittelt werden und/oder es können Kennwerte für mehrere vorgegebene Temperaturschwellen bestimmt werden.

So kann der erste Kennwert beispielsweise ein binärer (boolescher) Kennwert sein, der angibt, ob die vorgegebene Temperaturschwelle überschritten wurde oder nicht. Wie bei allen anderen Kennwerten ist dieses Ergebnis nicht exakt ermittelbar, sondern kann nur im Rahmen einer gewissen Ungenauigkeit abgeschätzt werden. Alternativ zu einem solchen binären Wert ( wahr/falsch) kann mit dem ersten Kennwert aber auch die Wahrscheinlichkeit für das Überschreiten der Temperaturschwelle auf einer mehrstufigen Wahrscheinlichkeitsskala (z.B. äußerst geringe / geringe / mittlere / hohe / sehr hohe Wahrscheinlichkeit) oder als Wahrscheinlichkeitswert auf einer kontinuierlichen Skala angegeben werden. Die Information über das Überschreiten einer gegebenen Temperaturschwelle kann insbesondere daraus abgeleitet werden, dass sich eine IMP (deren Bildung für die betrachtete Temperatur charakteristisch ist) überhaupt in signifikanten Mengen gebildet hat. Falls Schichtstapel für mehrere IMP-Systeme mit unterschiedlichen chemischen Zusammensetzungen im Testelement vorliegen, können auf besonders einfache Weise die entsprechenden ersten Kennwerte für mehrere vorgegebene Temperaturschwellen ermittelt werden.

Falls sich ergibt, dass eine erste vorgegebene Temperaturschwelle mit einer gewissen Wahrscheinlichkeit überschritten worden ist, kann ein zweiter Kennwert angeben, mit welcher Dauer diese Überschreitung stattgefunden hat. Ein solcher zweiter Kennwert kann beispielsweise aus der Dicke der ausgebildeten IMP abgeleitet werden, besonders vorteilhaft aus der vorab beschriebenen gestuften Dickenserie. Wenn mehrere solche gestuften Dickenserien für eine Mehrzahl von unterschiedlichen IMP-Systemen vorliegen, können die entsprechenden zweiten Kennwerte auch für mehrere Temperaturschwellen ermittelt werden. So kann auf vergleichsweise einfache Weise eine detaillierte Information über die Höhe und Dauer der bisherigen thermischen Belastungen des Bauteils erhalten werden. Das Ausschöpfen eines sogenannten "thermischen Budgets", welches dem Bauteil zur Verfügung steht, ohne dass signifikante Schäden daran entstehen, kann somit gut abgeschätzt werden. Die Berechnung des zweiten Kennwerts auf Basis der ermittelten Dicke erfolgt allgemein unter Verwendung der vorbekannten Wachstumskonstante für den betrachteten Temperaturbereich. Bei einer gegebenen Temperatur (z.B. für die betrachtete Temperaturschwelle) kann aus der IMP-Dicke und der Wachstumskonstante auf die Auslagerungszeit geschlossen werden.

Alternativ oder zusätzlich zu dem zweiten Kennwert kann auch ein dritter Kennwert ermittelt werden, der angibt, wie häufig die vorgegebene Temperaturschwelle überschritten worden ist. Dies setzt allgemein voraus, dass die typische Überschreitungsdauer bekannt ist, beispielsweise wenn ein Nutzungsintervall des Bauteils eine vorgegebene feste Dauer hat. Unter diesen Umständen kann aus der Belastungszeit auch eine Anzahl der Belastungszyklen abgeschätzt werden.

Allgemein vorteilhaft kann insgesamt eine Mehrzahl von Kennwerten für die bisherige thermische Belastung des Bauteils ermittelt werden, insbesondere auf der Grundlage von Messungen an einer Mehrzahl von Testsegmenten und/oder einer Mehrzahl von ausgebildeten intermetallischen Phasen. Dabei entspricht die Bestimmung mehrerer solcher Belastungs-Kennwerte aus den Messungen an mehreren Testsegmenten und/oder mehreren IMP-Systemen dem Lösen eines Gleichungssystems mit mehreren Unbekannten. Je mehr voneinander unabhängige Messdaten vorliegen, desto genauer kann die Abschätzung erfolgen. Dabei können unter Umständen auch zusätzliche Informationen aus der Benutzungshistorie genutzt werden, z.B. eventuell vorhandene Sensordaten zu bestimmten Belastungszuständen oder andere bekannte Randbedingungen aus dem Betrieb. Bei der Bestimmung der genannten Kennwerte aus den vorhandenen Daten können vorteilhaft auch Verfahren der künstlichen Intelligenz zum Einsatz kommen. Insbesondere können künstliche neuronale Netze eingesetzt werden, welche mit ähnlichen Messungen an ähnlichen Testelementen nach thermischer Belastung mit tatsächlich gemessenen Temperaturprofilen trainiert wurden.

Gemäß einer weiteren vorteilhaften Ausführungsform kann das Verfahren einen oder mehrere der folgenden zusätzlichen Schritte umfassen:
c) Abschätzen einer Restlebensdauer des Bauteils auf Basis des wenigstens einen ermittelten Kennwerts,
d) Treffen einer Entscheidung über eine Weiternutzung des Bauteils.

Mit anderen Worten kann die Abschätzung der thermischen Belastung dazu genutzt werden, um bessere Entscheidungen über eine Weiternutzung des Bauteils zu treffen und somit allgemein Ressourcen besser auszunutzen. Durch die Abschätzung der Restlebensdauer können insbesondere Umweltbelastungen reduziert werden, wobei gleichzeitig durch die erhaltene Information über die bisherige thermische Belastung Ausfälle durch vorzeitige Alterung geringgehalten werden können. Wenn das Bauteil eine Einzelkomponente eines übergeordneten Produkts ist, dann kann die Weiternutzung des Bauteils auch nach dem Einbau in ein anderes Produkt erfolgen. Gegebenenfalls kann vor der Weiternutzung eine Aufbereitung des Bauteils (Refurbishing) erfolgen. Auch hierüber kann gegebenenfalls in Abhängigkeit der mit dem erfindungsgemäßen Verfahren abgeschätzten bisherigen thermischen Belastung entschieden werden.

Gemäß einer vorteilhaften Ausführungsform des Bauteils kann dieses ein Testfeld mit einer Mehrzahl von einzelnen Testsegmenten umfassen, welche jeweils einen zugeordneten Schichtstapel enthalten. Dabei kann sich insbesondere zumindest ein Teil der Testsegmente bezüglich des Aufbaus der zugeordneten Schichtstapel unterscheiden. Auf diese Weise wird eine (näherungsweise) Bestimmung einer Mehrzahl von Kennwerten für die thermische Belastung des Bauteils ermöglicht, wie weiter oben beschrieben. Dabei kann das Testfeld vorteilhaft wenigstens eine außenliegende Schicht pro Segment aufweisen, an welcher die physikalische Messung durchgeführt werden kann. Diese außenliegende Schicht des Schichtstapels kann nach außen vollständig offenliegen, um besonders leicht für eine physikalische Messung zugänglich zu sein. Dies ist jedoch nicht zwingend erforderlich, da z.B. eine optische Messung auch durch ein transparentes Decksubstrat erfolgen kann oder eine elektrische Messung auch über seitlich liegende Kontaktpunkte möglich ist.

Das Testelement mit der Mehrzahl von Testsegmenten kann insgesamt beispielsweise laterale Abmessungen von einigen Quadratmillimetern bis zu einigen Quadratzentimetern aufweisen. Es kann beispielsweise um wenigstens 1 mm und vorteilhaft wenigstens 5 mm von den übrigen funktionalen Elementen des Bauteils beabstandet sein und insgesamt separat von diesen ausgestaltet sein. Allgemein können die einzelnen Testsegmente des Testfeldes eng beieinander liegen und von ihren nächsten Nachbarn jeweils weniger als 1 mm und bevorzugt weniger als 10 µm beabstandet sein. Der Abstand kann auch Null sein, so dass die einzelnen Testsegmente nahtlos ineinander übergehen können. Dies gilt insbesondere für nebeneinanderliegende Testsegmente einer gestuften Dickenserie aus einem einheitlichen Materialsystem.

Nachfolgend wird die Erfindung anhand einiger bevorzugter Ausführungsbeispiele unter Bezugnahme auf die angehängten Zeichnungen beschrieben, in denen:
- Figur 1: eine schematische Aufsicht eines Bauteils nach einem ersten Beispiel der Erfindung zeigt,
- Figur 2: eine schematische Aufsicht eines weiteren beispielhaften Bauteils zeigt,
- Figur 3: einen schematischen Querschnitt eines Testelements zeigt,
- Figur 4: ein Testelement mit einem alternativen Schichtaufbau zeigt,
- Figur 5: eine schematische Aufsicht eines weiteren Testfeldes zeigt und
- Figur 6: eine beispielhafte Schar von Messpunkten für die Temperaturabhängigkeit der Ausbildung einer intermetallischen Phase zeigt.

In den Figuren sind gleiche oder funktionsgleiche Elemente mit gleichen Bezugszeichen versehen.

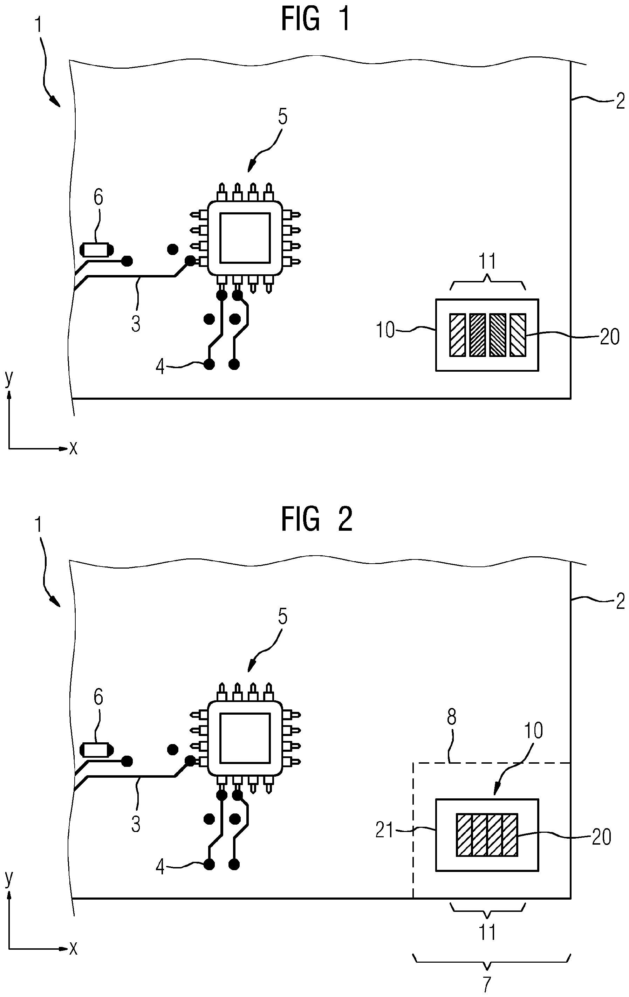

In Figur 1 ist eine schematische Aufsicht eines Bauteils 1 nach einem ersten Beispiel der Erfindung gezeigt. Dieses Bauteil 1 eignet sich zur Durchführung des erfindungsgemäßen Verfahrens, um eine thermische Belastung während der Nutzung dieses Bauteils 1 abzuschätzen. In diesem Beispiel ist das Bauteil eine elektronisches Bauteil 1, welches eine Leiterplatte 2 mit einer Mehrzahl von elektrischen Leiterbahnen 3 umfasst. Dargestellt ist hier eine Aufsicht auf eine Oberseite der Leiterplatte 2, also mit anderen Worten eine Aufsicht auf die xy-Ebene, wobei x und y die lateralen Raumrichtungen innerhalb der Hauptebene der Leiterplatte 2 darstellen. Beispielhaft sind hier nur einige wenige Leiterbahnen 3 mit einigen zugeordneten Kontaktpunkten 4 gezeigt. Die Leiterplatte 2 ist mit einem beispielhaften integrierten Schaltkreis (also einem Chip) 5 und einem SMD-Widerstand 6 bestückt. Diese Bauelemente 5, 6 und Leiterbahnen 3 stehen dabei nur repräsentativ für einen in der Praxis meist deutlich komplexeren Aufbau mit einer Vielzahl von elektrisch miteinander zusammenwirkenden Elementen.

Wesentlich im Zusammenhang mit der vorliegenden Erfindung ist, dass das Bauteil 1 in einem Teilbereich (hier in der rechten unteren Ecke der Leiterplatte 2) ein Testelement 10 aufweist, welches für die Durchführung des Verfahrens geeignet ist. Dieses Testelement 10 ist in einem separaten Abschnitt de Leiterplatte 2 ausgebildet und ist von den übrigen elektrischen Elementen, die zur eigentlichen Funktionalität des Bauteils 1 beitragen, räumlich separiert. Das Testelement 10 kann beispielsweise ein vorkonfektioniertes Element sein, welches durch eine Bestückung auf die Leiterplatte 2 aufgebracht und mit dieser fest verbunden wurde. Im gezeigten Beispiel weist das Testelement 10 ein Testfeld 11 mit vier separaten Testsegmenten 20 auf. Jedes dieser vier Testsegmente 20 weist einen Schichtstapel aus metallischen Schichten auf, in dem sich infolge thermischer Belastung eine intermetallische Phase (IMP) ausbilden kann. Prinzipiell reicht schon ein solches Testsegment 20 zur Durchführung des Verfahrens aus. Allerdings kann durch eine Mehrzahl von unterschiedlichen Testsegmenten die Genauigkeit bei der Abschätzung der bisherigen thermischen Belastung des Bauteils 1 erhöht werden. Dier hier gezeigten vier Testsegmente 20 weisen eine unterschiedliche Materialzusammensetzung der jeweiligen Schichtstapel auf, so dass unterschiedliche IMP in den einzelnen Testsegmenten 20 ausgebildet werden können. Die thermische Belastung wird anhand einer physikalischen Messung abgeschätzt, welche an dem Testelement 10 durchgeführt wird. Beim Beispiel der Figur 1 ist das Testelement fest mit der Leiterplatte 2 verbunden, und die physikalische Messung erfolgt zerstörungsfrei in Bezug auf das ganze Bauteil 1 und damit auch in Bezug auf die Leiterplatte 2, z.B. durch eine optische oder elektrische Messung in dem Teilbereich des Testelements 10.

In Figur 2 ist eine alternative Ausführungsform eines solchen Bauteils 1 gezeigt. Auch dieses Bauteil ist ein elektrisches Bauteil 1 mit einer Leiterplatte 2 und einer Mehrzahl von elektrischen Elementen 3 bis 6, ähnlich wie beim Beispiel der Figur 1. Im Unterschied zum vorhergehenden Beispiel ist hier das Testelement 10 in einem abtrennbaren Teilbereich 7 der Leiterplatte gebildet. Um die physikalische Messung zur Abschätzung der thermischen Belastung auszuführen, kann dieses Testfeld 10 entlang einer Perforationslinie 8 aus der übrigen Leiterplatte 2 herausgetrennt werden. Im Bereich dieser Perforationslinie 8 ist der Teilbereich des Testfeldes 10 nur mit dünnen Stegen mit den Hauptteil der Leiterplatte 2 verbunden, wobei diese Stege durch geringe Krafteinwirkung getrennt werden können. Bis zum Auftrennen dieser Stege bildet jedoch auch hier das Testelement 10 einen integralen Bestandteil der Leiterplatte. Ein weiterer Unterschied zum vorhergehenden Ausführungsbeispiel besteht darin, dass die einzelnen Testsegmente 20 des Testfeldes 11 hier räumlich nicht voneinander beabstandet sind. Sie unterscheiden sich hier nicht in der Materialzusammensetzung der einzelnen Schichtstapel, sondern nur in er Schichtdicke einer obenliegenden Schicht des Schichtstapels. Entsprechend sind die Schichtstapel der einzelnen Testsegmente 20 hier auf einer gemeinsamen ersten metallischen Schicht 21 ausgebildet. Dieses Testelement 10 kann beispielsweise *in situ* auf der Leiterplatte 2 ausgebildet worden sein, also beispielsweise durch direkte Metallisierung des Leiterplatten-Substrats.

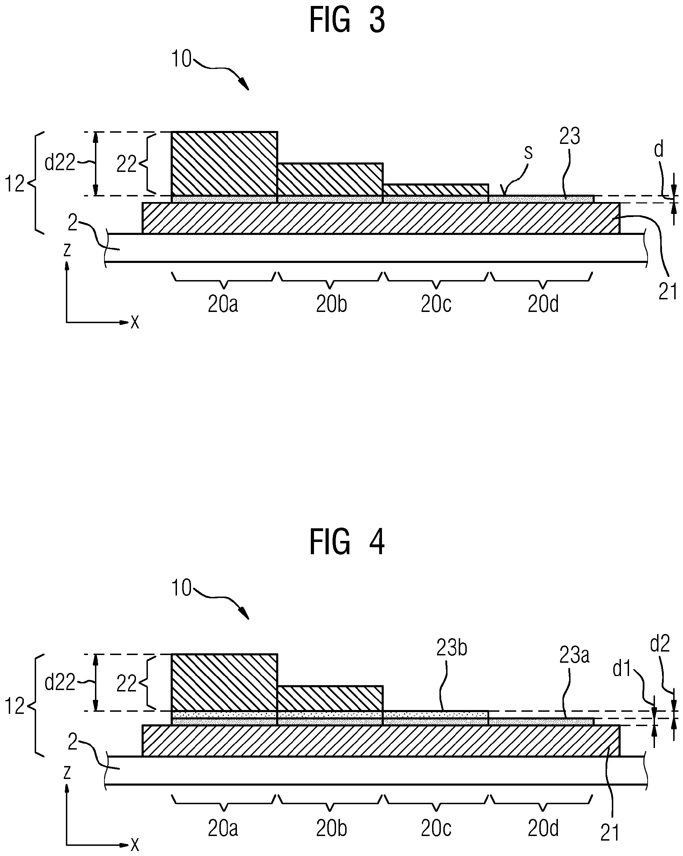

Figur 3 zeigt einen schematischen Querschnitt durch ein solches Testelement 10 mit vier Testsegmenten 20a bis 20b, wie es beispielsweise im Bauteil 1 der Figur 2 zum Einsatz kommen kann. In dieser Ansicht ist ein Schnitt durch die xz-Ebene gezeigt, wobei z die vertikale Raumrichtung senkrecht zu Leiterplattenebene ist. Auf der Leiterplatte 2 ist eine gemeinsame erste metallische Schicht 21 für das gesamte Testelement 10 gebildet. Diese erste metallische Schicht 21 ist Teil eines übergeordneten Schichtstapels 12, der in die vier Testsegmente 20a bis 20d unterteilt ist. Die erste metallische Schicht 21 ist beispielsweise im Wesentlichen aus Nickel gebildet und kann durch galvanische oder chemische Abscheidung bzw. durch Sputtern oder ähnliche bekannte Verfahren aufgebracht worden sein. Im Ausgangszustand des Schichtstapels 12 ist auf dieser ersten metallischen Schicht 21 eine zweite metallische Schicht 22 ausgebildet, welche hier insbesondere im Wesentlichen aus Zinn besteht. Die Dicke d22 dieser Zinnschicht unterscheidet sich zwischen den einzelnen Testsegmenten 20a bis 20d. In Figur 3 ist allerdings nicht der Ausgangszustand (direkt nach der Herstellung) gezeigt, sondern ein Zustand nach einer Benutzungsphase, in der das Bauteil bereits einer thermischen Belastung ausgesetzt gewesen ist. Entsprechend hat sich zwischen der Nickelschicht 21 und der Zinnschicht 22 bereits eine IMP 23 der stöchiometrischen Zusammensetzung Ni₃Sn₄ und der (mittleren) Dicke d ausgebildet. Beim gezeigten Beispiel entspricht diese Dicke d in etwa der Dicke der ursprünglichen Zinnschicht 22 in dem Testsegment 20d mit der geringsten Dicke d22. Somit hat für dieses dünnste Testsegment 20d der gezeigten Schichtdicken-Serie so gerade eben eine vollständige Durchwachsung mit der IMP stattgefunden. Diese vollständige Durchwachsung führt zu einer deutlichen Veränderung der optischen Eigenschaften im Bereich der außenliegenden Oberfläche s dieses Testsegments 20d, so dass sie durch eine optische Messung leicht nachweisbar ist. Durch eine solche gestufte Dickenserie lässt sich also für ein gegebenes Materialsystem (mit einheitlichen Materialien der beiden Schichten, aber unterschiedlicher Schichtdicke für eine dieser Schichten) auf vergleichsweise einfache Weise die Dicke der ausgebildeten IMP bestimmen. Je feingranularer die Variation der Schichtdicken erfolgt, umso genauer kann die Bestimmung der Dicke d erfolgen, ohne dass hierfür eine aufwändige Probenaufbereitung nötig ist. Insbesondere kann dabei auf die Anfertigung von Querschliffen verzichtet werden, sondern eine Messung im Bereich einer außenliegenden Oberfläche s reicht zur Dickenbestimmung aus. Die Variation der Schichtdicke kann über einen größeren Dickenbereich erfolgen, so dass ich z.B. die Dicke d22 für das dünnste Testsegment 20d und das dickste Testsegment 20a um einen Faktor 5 oder mehr unterscheiden können. Prinzipiell kann auch die Dicke der untenliegenden Schicht 21 variiert werden, wobei allerdings die Variation der obenliegenden Schicht 22 des Schichtstapels 12 fertigungstechnisch leichter umzusetzen ist. Abhängig vom aufgebrachten Material der zweiten metallischen Schicht 22 und vom Herstellungsverfahren kann diese Dickenvariation beispielsweise durch Verwenden eines entsprechend gestuft geformten Lötformteils (insbesondere für Zinnschichten) oder auch durch entsprechende Masken für einen mehrstufigen metallischen Abscheidungsprozess erreicht werden. Das gestufte Dickenprofil kann beispielsweise einen einheitlichen Abstand in der Dicke der einzelnen Testsegmente aufweisen oder (wie hier dargestellt) einen zu höheren Dicken hin größer werdenden Abstand. So kann die ausgebildete Dicke mit wenigen Testsegmenten besonders genau eingegrenzt werden.

Figur 4 zeigt einen schematischen Querschnitt durch ein alternatives Testelement 10, das insgesamt ähnlich aufgebaut ist wie das Testsegment 10 des vorhergehenden Beispiels. Auch hier sind beispielhaft vier Testsegmente 20a bis 20d innerhalb eines gestuften Schichtdickenserie gezeigt. Im Unterschied zum vorhergehenden Beispiel ist hier jedoch die erste metallische Schicht 21 im Wesentlichen aus Kupfer gebildet. Die zweite metallische Schicht 22 ist auch hier im Wesentlichen aus Zinn gebildet. Bei diesem Materialsystem können sich aus den beiden Ausgangsmaterialien Kupfer und Zinn zwei unterschiedliche stöchiometrische intermetallische Phasen ausbilden, nämlich eine erste IMP 23a der Zusammensetzung CuaSn und eine zweite IMP 23b der Zusammensetzung Cu₆Sn₅. Dies ist in Figur 4 schematisch dargestellt, wobei die erste IMP 23a mit dem höheren Kupferanteil innerhalb des Schichtsystems unten liegt und die zweite IMP 23b mit dem höheren Zinnanteil im Schichtstapel 12 oben auf der Seite der ursprünglichen Zinnschicht 22 liegt. Das Mengenverhältnis der beiden IMP ist abhängig von der Auslagerungstemperatur (also der bisherigen Temperaturbelastung), und es ergeben sich zwei charakteristische Schichtdicken d1 und d2, die über das gestufte Dickenprofil in ähnlicher Weise bestimmt werden können, wie dies für die einzelne IMP des vorhergehenden Beispiels erläutert wurde. Auch wenn in einem realen System die beiden Schichten 23a und 23b nicht so vollständig separiert übereinanderliegen wie in dieser idealisierten Darstellung, so ist mit einem solchen gestuften Dickenprofil trotzdem die näherungsweise Bestimmung der beiden (mittleren) Schichtdicken d1 und d2 anhand der entsprechenden Durchwachsungs-Grenzen möglich. Beim bezeigten Beispiel ist das dünnste Testsegment 20d so gerade eben mit der ersten IMP 23a vollständig durchwachsen, und das zweitdünnste Testsegment 20c ist so gerade eben mit der zweiten IMP 23b vollständig durchwachsen. Allgemein gilt, dass bei einem solchen System (mit mehreren möglichen IMPs aus nur zwei Ausgangsmaterialien) mittels einer solchen gestuften Schichtdicken-Serie eine noch genauere Abschätzung der bisherigen Temperaturbelastung erfolgen kann, da aus einer einzelnen Messreihe noch mehr Informationen abgeleitet werden können.

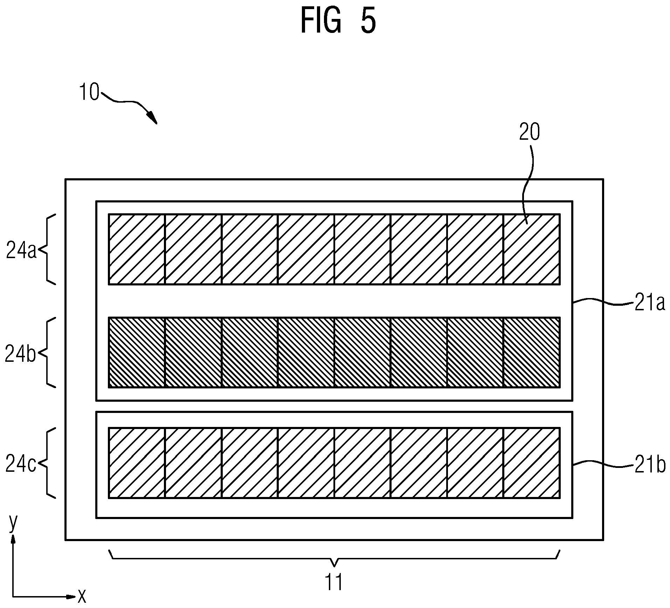

In Figur 5 ist eine schematische Aufsicht auf ein weiteres Testelement 10 gezeigt, welches als zweidimensionales Testfeld 11 ausgebildet ist. In der ersten lateralen Raumrichtung (x) ist dabei jeweils die Schichtdicke der obenliegenden Schicht des Schichtstapels variiert, ähnlich wie bei den Beispielen der Figuren 2, 3 und 4. In der zweiten lateralen Raumrichtung (y) ist zusätzlich die Materialzusammensetzung des Schichtstapels variiert, ähnlich wie beim Beispiel der Figur 1. So ergeben sich insgesamt drei verschiedene gestufte Dickenserien 24a, 24b und 24c mit unterschiedlichen zusammengesetzten Schichtstapeln. Die erste gestufte Dickenserie 24a weist eine erste metallische Schicht 21a auf, die z.B. im Wesentlichen aus Kupfer gebildet ist und eine darüberliegende zweite metallische Schicht, die z.B. im Wesentlichen aus Zinn gebildet ist. Die zweite gestufte Dickenserie 24b weist eine erste metallische Schicht 21a auf, die z.B. im Wesentlichen aus Kupfer gebildet ist und eine darüberliegende zweite metallische Schicht, die z.B. im Wesentlichen aus Zink oder Gold gebildet ist. Die erste metallische Schicht 21a der beiden Dickenserien 24a und 24b kann dabei insbesondere, wie hier dargestellt, als gemeinsames metallisches Element ausgebildet sein. Die dritte gestufte Dickenserie 24c ist dagegen mit einer separaten unteren Metallisierungsschicht 21b gebildet, welche beispielsweise wiederum im Wesentlichen aus Nickel bestehen kann. Die darüberliegende zweite metallische Schicht ist z.B. wiederum im Wesentlichen aus Zinn gebildet ist, so dass sich ein analoges Materialsystem wie beim Beispiel der Figur 3 ergibt. Hier ist jedoch eine etwas größere Anzahl an einzelnen Stufen der Schichtdicken-Serie gezeigt, was eine genauere Bestimmung der Durchwachsungs-Grenze mit der gebildeten IMP erlaubt. Insgesamt kann die Anzahl der Stufen in einer solchen Serie größer oder kleiner gewählt sein, und auch die Anzahl der eingesetzten Materialsysteme kann prinzipiell größer oder kleiner sein. Allgemein ist eine Ausführungsform, bei der sowohl wenigstens eine Schichtdicke als auch die Zusammensetzung des Materials variiert wird, besonders vorteilhaft, um eine größere Anzahl von Kennwerten für die thermische Belastung aus den durchgeführten physikalischen Messungen ableiten zu können. Die gezeigte zweidimensionale Anordnung ist besonders vorteilhaft für eine platzsparende Ausgestaltung des Testfeldes 11. Prinzipiell sind aber auch andere Anordnungen möglich, bei denen die beiden Parameter (Zusammensetzung und Schichtdicke) variiert werden.

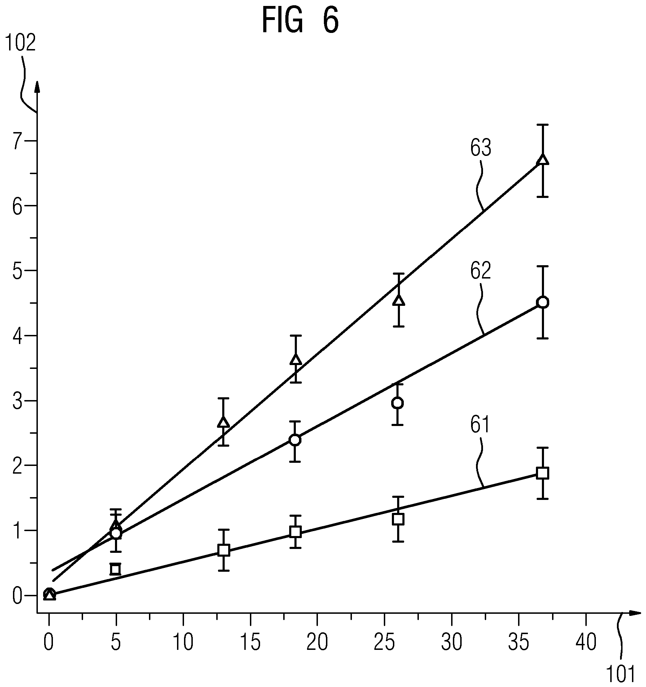

In Figur 6 ist eine beispielhafte Schar von Messpunkten gezeigt, die die Temperaturabhängigkeit der Ausbildung der intermetallischen Phase Cu₆Sn₅ verdeutlichen. Auf der Abszisse 101 des gezeigten Diagramms ist dabei die Quadratwurzel der Auslagerungszeit in Stunden^{0,5} angeben. Auf der Ordinate 102 ist die gemessene Dicke der bei der jeweiligen Auslagerungszeit gebildeten Schicht in Mikrometern angeben. Die mit Quadraten dargestellten Messpunkte wurden dabei für eine Auslagerungstemperatur von 100 °C ermittelt, wobei die zugehörige Ausgleichsgerade mit 61 bezeichnet ist. Die mit Kreisen gekennzeichneten Messpunkte und die zugehörige Ausgleichsgerade 62 wurden für eine Auslagerungstemperatur von 150 °C ermittelt. Die mit Dreiecken gekennzeichneten Messpunkte und die zugehörige Ausgleichsgerade 63 wurden für eine Auslagerungstemperatur von 170 °C ermittelt. Aus den Geradensteigungen der Ausgleichsgeraden aus den jeweiligen linearen Regressionen können die Wachstumskonstanten für jeweiligen Auslagerungstemperaturen bestimmt werden. Für den hier abgedeckten Temperaturbereich unterscheiden sich die Wachstumskonstanten um mehr als eine Größenordnung, wobei die absoluten Werte nicht nur von der chemischen Zusammensetzung der gebildeten IMP, sondern auch von den Abscheidungsbedingungen abhängen. Bei größeren Temperaturbereichen wird eine noch höhere Spreizung erreicht, so dass sich die ermittelten Wachstumskonstanten um mehrere Größenordnungen unterscheiden. Im Rahmen des erfindungsgemäßen Verfahrens ist es daher zweckmäßig, die Wachstumskonstanten bei den entsprechenden Abscheidungsbedingungen der eingesetzten metallischen Schichten vorab zu bestimmen.

Wenn die Wachstumskonstanten für die potenziell auszubildenden IMP in den eingesetzten Schichtstapeln für eine Mehrzahl von charakteristischen Temperaturen bekannt sind, kann aus dem Nachweis der ausgebildeten IMP auf eine bisherige thermische Belastung geschlossen werden. Zunächst kann dabei ermittelt werden, ob überhaupt signifikante Mengen (z.B. eine Schichtdicke von wenigstens 1 µm) einer gegebenen IMP gebildet worden sind. Abhängig von der Antwort auf diese Frage (ja oder nein), kann darauf geschlossen werden, ob überhaupt eine vorgegebene Temperaturschwelle überschritten worden ist. Eine experimentelle Bestimmung der Schichtdicke der gebildeten IMP ermöglicht dann gegebenenfalls eine Abschätzung, über welche Dauer (Auslagerungszeit) eine vorgegebene Temperaturschwelle überschritten worden ist. Die daraus abgeleitete Information ist aber nicht exakt. So ist in Figur 6 ersichtlich ist, dass z.B. eine 3 µm dicke Schicht aus Cu₆Sn₅ durch eine kürzere Auslagerung bei 170 °C oder durch eine entsprechend längere Auslagerung bei 150 °C (oder durch andere Kombinationen von Temperatur und Zeit) gebildet werden kann. Um die thermische Belastung genauer abschätzen zu können, ist es daher zweckmäßig, eine Mehrzahl von Materialsystemen (ggf. in Kombination mit entsprechenden Schichtdicken-Serien) einzusetzen, um die Parameter der von dem Bauteil erfahrenen thermischen Belastung noch weiter eingrenzen zu können. Insgesamt können so ein oder mehrere Kennwerte der thermischen Belastung bestimmt werden, die eine Abschätzung ermöglichen, ob ein über die Lebensdauer des Bauteils zur Verfügung stehendes Budget an thermischen Belastungen bereits ausgeschöpft ist.

### Bezugszeichenliste

- 1: Bauteil
- 2: Leiterplatte
- 3: Leiterbahnen
- 4: Kontaktpunkte
- 5: integrierter Schaltkreis
- 6: SMD-Widertand
- 7: abtrennbarer Teilbereich
- 8: Perforationslinie
- 10: Testelement
- 11: Testfeld
- 12: Schichtstapel
- 20: Testsegmente
- 21: erste metallische Schicht
- 22: zweite metallische Schicht
- 23: intermetallische Phase (IMP)
- 23a: erste IMP (Cu₃Sn)
- 23b: zweite IMP (Cu₆Sn₅)
- 24a: erste gestufte Dickenserie
- 24b: zweite gestufte Dickenserie
- 24c: dritte gestufte Dickenserie
- 61: Ausgleichsgerade für Messpunkte bei 100 °C
- 62: Ausgleichsgerade für Messpunkte bei 150 °C
- 63: Ausgleichsgerade für Messpunkte bei 170 °C
- 101: Abszisse (Zeit^{0,5} in h^{0,5})
- 102: Ordinate (d in µm)
- d: Dicke der gebildeten IMP
- d22: Dicke der zweiten metallischen Schicht
- s: außenliegende Oberfläche
- x,y: laterale Raumrichtungen
- z: vertikale Raumrichtung

## Patentansprüche

1. Verfahren zum Abschätzen einer thermischen Belastung eines Bauteils (1) für einen Zeitraum nach einer Herstellung des Bauteils (1),
- wobei das Bauteil (1) ein Testelement (10) umfasst, welches in einem Ursprungszustand des Bauteils (1) wenigstens einen Schichtstapel (12) mit wenigstens zwei flächig übereinanderliegenden Schichten (21,22) aus wenigstens zwei unterschiedlichen metallischen Materialien aufweist, so dass durch eine thermische Belastung des Testelements (10) eine intermetallische Phase (23) aus den unterschiedlichen metallischen Materialien ausgebildet werden kann,
- wobei das Verfahren die folgenden Schritte umfasst:
a) Durchführen einer physikalischen Messung an dem Testelement (10), mittels welcher eine Menge (d) einer durch thermische Belastung ausgebildeten intermetallischen Phase (23) ermittelbar ist,
b) Ermitteln wenigstens eines Kennwerts für die bisherige thermische Belastung des Bauteils (1) zum Zeitpunkt der Messung auf Basis einer durch die physikalische Messung ermittelten Menge (d) der im Testelement (10) ausgebildeten intermetallischen Phase (23).

2. Verfahren nach Anspruch 1, bei welchem der Schichtstapel (12) so ausgebildet ist, dass die intermetallische Phase (23) durch eine thermische Belastung bei einer Belastungstemperatur im Bereich zwischen 50 °C und 250 °C ausgebildet werden kann.

3. Verfahren nach Anspruch 1 oder 2, bei welchem die intermetallische Phase (23) eine Verbindung mit einer stöchiometrischen Zusammensetzung aus wenigstens zwei Metallen ist, insbesondere eine Verbindung des Typs Cu₃Sn, Cu₆Sn₅, FeSn₂ und/oder Ni₃Sn₄.

4. Verfahren nach einem der vorhergehenden Ansprüche, bei welchem das Bauteil (1) eine Leiterplatte (2) umfasst und wobei das Testelement durch Bestücken wenigstens eines vorgefertigten Ausgangselements (10) auf die Leiterplatte (2) gebildet ist und/oder in das Bauteil (1) eingebracht worden ist.

5. Verfahren nach einem der vorhergehenden Ansprüche, welchem das Testelement (10) ein Testfeld (11) mit einer Mehrzahl von einzelnen Testsegmenten (20) umfasst, welche jeweils einen zugeordneten Schichtstapel (12) enthalten,
- wobei sich zumindest ein Teil der Testsegmente (20) bezüglich des Aufbaus der zugeordneten Schichtstapel (12) unterscheidet.

6. Verfahren nach Anspruch 5, bei welchem sich zumindest ein Teil der Testsegmente (20) bezüglich der Wahl des metallischen Materials einer oder mehrerer Schichten (21,22) des jeweiligen Schichtstapels (12) unterscheidet.

7. Verfahren nach Anspruch 5 oder 6, bei welchem sich zumindest ein Teil der Testsegmente (20) bezüglich einer Schichtdicke (d22) einer oder mehrerer Schichten (22) des jeweiligen Schichtstapels (12) unterscheidet.

8. Verfahren nach Anspruch 7, bei welchem sich zumindest ein Teil der Testsegmente (20) bezüglich einer Schichtdicke (d22) einer außenliegenden Schicht (22) des Schichtstapels (12) unterscheidet, wobei diese Schichtdicke (d22) insbesondere in einem Bereich variiert wird, der zwischen 0,05 µm und 100 µm liegt.

9. Verfahren nach einem der vorhergehenden Ansprüche, bei welchem die physikalische Messung auf einer oder mehreren der folgenden Messmethoden basiert:
- einer optischen Messung,
- einer elektrischen Messung,
- einer Messung eines Kontaktwinkels,
- einer Elementaranalyse.

10. Verfahren nach einem der vorhergehenden Ansprüche, bei welchem die physikalische Messung an einer außenliegenden Schicht (22,23) des Schichtstapels (12) durchgeführt wird.

11. Verfahren nach einem der vorhergehenden Ansprüche, bei welchem der ermittelte Kennwert für die bisherige thermische Belastung einer der folgenden Kennwerte ist oder einen solchen Kennwert umfasst:
- ein Kennwert, welcher charakteristisch für das bisherige Vorkommen einer Überschreitung einer vorgegebenen Temperaturschwelle ist,
- ein Kennwert, welcher charakteristisch für die Dauer einer vorgekommenen Überschreitung einer vorgegebenen Temperaturschwelle ist,
- ein Kennwert, welcher charakteristisch für die Häufigkeit der vorgekommenen Überschreitungen einer vorgegebenen Temperaturschwelle ist, insbesondere bei Annahme einer typischen Überschreitungsdauer.

12. Verfahren nach einem der vorhergehenden Ansprüche, bei welchem insgesamt eine Mehrzahl von Kennwerten für die bisherige thermische Belastung des Bauteils (1) ermittelt wird, insbesondere auf der Grundlage von Messungen an einer Mehrzahl von Testsegmenten (20) und/oder einer Mehrzahl von ausgebildeten intermetallischen Phasen (23a,23b).

13. Verfahren nach einem der vorhergehenden Ansprüche, welches einen oder mehrere der folgenden zusätzlichen Schritte umfasst:
c) Abschätzen einer Restlebensdauer des Bauteils (1) auf Basis des wenigstens einen ermittelten Kennwerts,
d) Treffen einer Entscheidung über eine Weiternutzung des Bauteils (1).

14. Bauteil (1) mit einem Testelement (10), welches in einem Ursprungszustand des Bauteils (1) wenigstens einen Schichtstapel (12) mit wenigstens zwei flächig übereinanderliegenden Schichten (21,229 aus wenigstens zwei unterschiedlichen metallischen Materialien aufweist, so dass durch eine thermische Belastung des Testelements (10) eine intermetallische Phase (23) aus den unterschiedlichen metallischen Materialien ausgebildet werden kann,
wobei das Testelement (10) ein dediziertes Testelement (10) ist, welches separat von weiteren funktionalen Elementen (3,4,5,6) des Bauteils (1) ausgebildet ist und unabhängig von elektrischen und/oder mechanischen Funktionalitäten vorliegt.

15. Bauteil nach Anspruch 14, bei welchem das Testelement (10) ein Testfeld (11) mit einer Mehrzahl von einzelnen Testsegmenten (20) umfasst, welche jeweils einen zugeordneten Schichtstapel (12) enthalten,
- wobei sich zumindest ein Teil der Testsegmente (20) bezüglich des Aufbaus der zugeordneten Schichtstapel (12) unterscheidet.
